# EUROPEAN PATENT APPLICATION

(11) **EP 4 738 572 A1**
(43) Date of publication of application: **06.05.2026**
(21) Application number: 23943457.4
(22) Date of filing: 22.12.2023
(51) Int. Cl.: H01M 50/244, B60L 53/80

(54) **BATTERY INSTALLATION FRAME, VEHICLE FRAME ASSEMBLY AND VEHICLE**

(30) Priority: 30.06.2023 CN 202310798928
(71) Applicant: Contemporary Amperex Technology Co., Limited, Ningde, Fujian 352100 (CN)
(72) Inventor: WU, Kai, Ningde, Fujian 352100 (CN); CAO, Gen, Ningde, Fujian 352100 (CN); LIN, Baiqing, Ningde, Fujian 352100 (CN); ZHANG, Shuai, Ningde, Fujian 352100 (CN)
(74) Representative: Ran, Handong
(86) International application number: PCT/CN2023/141149
(87) International publication number: WO 2025/000985

(57) **Abstract**

A battery installation frame, a vehicle frame assembly and a vehicle. The battery installation frame (10) comprises a plurality of extension portions (2) arranged at intervals, wherein a battery mounting space (4) running in the direction of height Z of the extension portions (2) is formed between two adjacent extension portions (2); and the battery installation frame (10) is provided with battery mounting structures (3) for mounting batteries (30) in the battery mounting spaces (4).

## Description

### CROSS-REFERENCE TO RELATED APPLICATIONS

This application is based on and claims priority to Chinese Patent Application No. 202310798928.8, filed on June 30, 2023, which is incorporated into this application by reference in its entirety.

### TECHNICAL FIELD

This application relates to the field of batteries, and more particularly, to a battery installation frame, a frame assembly, and a vehicle.

### BACKGROUND

Energy conservation and emission reduction are key to the sustainable development of the automotive industry. Electric vehicles, due to their advantages in energy efficiency and environmental friendliness, have become an important component of sustainable development in the automotive industry. For electric vehicles, the energy density of batteries affects the driving range per battery swap, which is beneficial for further improvement.

### SUMMARY

In view of the above issues, this application provides a battery installation frame, a frame assembly, and a vehicle, capable of increasing the dimensional energy density of batteries, thereby improving the driving range per battery swap of the vehicle.

According to a first aspect, this application provides a battery installation frame, where the battery installation frame includes a plurality of extension portions spaced apart, a battery mounting space running through along a height direction of the extension portions is formed between two adjacent extension portions, and the battery installation frame is provided with a battery mounting structure configured for mounting a battery in the battery mounting space.

In the technical solution of the embodiments of this application, by configuring the battery mounting space to run through along the height direction of the extension portions, the space utilization of the battery in the height direction of the extension portions is improved, thereby increasing the dimension of the battery in the height direction of the extension portions, which is conducive to improving the dimensional energy density of the battery, thus enhancing the driving range per battery swap of the vehicle. Additionally, by providing the battery mounting structure, the efficiency of battery swap is improved. Furthermore, the battery mounting space runs through along the height direction of the extension portions, so that heat dissipation of the battery is facilitated, and the weight of the battery installation frame is reduced, thereby lowering the onboard burden of the battery installation frame.

In some embodiments, the two extension portions defining the battery mounting space are spaced apart in a first direction and connected through a main body portion, the main body portion is located on one side of the extension portions in a second direction, and the first direction intersects with the second direction in a plane perpendicular to the height direction of the extension portions.

In the above technical solution, the two adjacent extension portions are connected through the main body portion, making the structure of the battery installation frame simpler and easier to design, facilitating welding or integral molding. When the first direction is the length direction of the vehicle, the plurality of extension portions are spaced apart along the length direction of the vehicle, enabling full utilization of the space in the length direction of the vehicle to arrange more extension portions, thereby defining a greater number of battery mounting spaces to mount more batteries. This increases the battery dimension while also increasing the number of mounted batteries, enhancing the driving range per battery swap of the vehicle and reducing the frequency of battery swaps per unit mileage.

In some embodiments, the two extension portions defining the battery mounting space are further connected through a reinforcing portion, and the reinforcing portion and the main body portion are disposed on both sides of the extension portions in the second direction.

In the above technical solution, by providing the reinforcing portion, the two extension portions defining the battery mounting space are connected at both ends in the second direction through the main body portion and the reinforcing portion, respectively, forming a ring-shaped structure around the battery mounting space. This structure has higher strength and enhances the mounting reliability of the battery, providing more comprehensive protection to the battery from all sides and allowing flexible positioning of the battery mounting structure.

In some embodiments, at least one of the main body portion, the extension portion, and the reinforcing portion is provided with the battery mounting structure.

In the above technical solution, the battery mounting structure can be arranged on any one or more of the main body portion, the extension portion, and the reinforcing portion, making the positioning of the battery mounting structure more flexible. This facilitates setting the position of the battery mounting structure according to the actual mounting requirements of the battery, reducing the difficulty of arranging the battery mounting structure and improving the reliability and convenience of battery mounting.

In some embodiments, the battery mounting structure is arranged on a side of the extension portion facing the battery mounting space.

In the above technical solution, by arranging the battery mounting structure on the side of the extension portion facing the battery mounting space, the battery mounting structure corresponds to the battery mounting space it faces and is configured for mounting the battery in that battery mounting space. This clarifies the correspondence between the battery mounting structure and the battery mounting space, allowing the battery to be inserted into the battery mounting space and connected to the battery mounting structure facing the battery mounting space, thereby facilitating battery mounting. Moreover, when a plurality of battery mounting spaces are provided, the battery mounting structures corresponding to different battery mounting spaces are positioned differently and do not interfere with each other, allowing the battery mounting structure corresponding to each battery mounting space to have sufficient space for flexible arrangement. This enables the battery mounting structure to mount the battery more easily and reliably.

In some embodiments, a plurality of battery mounting structures are provided, with at least two spaced apart along the second direction.

The above technical solution facilitates full utilization of the space of the extension portion in the second direction, allowing more battery mounting structures to be arranged, thereby enhancing the mounting stability of the battery or increasing the number of batteries mounted in the battery mounting space.

In some embodiments, the extension portion is plate-shaped, with a thickness direction of the extension portion being the first direction and a length direction of the extension portion being the second direction.

In the above technical solution, by configuring the extension portion as plate-shaped and defining the first direction and the second direction as described, the battery mounting space can be located on one or both sides of the extension portion in the thickness direction, thereby fully utilizing the structural characteristics of the extension portion to define the battery mounting space. This results in the extension portion occupying less space while defining a larger battery mounting space.

In some embodiments, a height of the extension portion in the second direction decreases in a direction away from the main body portion.

In the above technical solution, by configuring the height of the extension portion to decrease in the second direction away from the main body portion, the height of the end of the extension portion connected to the main body portion is relatively larger, while the height of the end of the extension portion away from the main body portion is relatively smaller. This enhances the connection strength between the extension portion and the main body portion, improves the battery mounting reliability of the extension portion, and reduces the weight of the extension portion, thereby lowering the vehicle load.

In some embodiments, the battery mounting structure is arranged at a lower edge of the extension portion in the height direction, the lower edge of the extension portion extends along a horizontal line, and an upper edge of the extension portion decreases in a direction away from the main body portion.

In the above technical solution, by arranging the battery mounting structure at the lower edge of the extension portion in the height direction, with the lower edge of the extension portion extending along a horizontal line, the battery mounting structures are positioned at the same height and relatively low, facilitating battery mounting operations, reducing the difficulty of battery mounting, and saving space for battery swapping operations, which is beneficial for increasing the dimension and energy density of the battery.

In some embodiments, the extension portion is provided with a reinforcing rib and/or a weight-reducing structure.

In the above technical solution, providing a reinforcing rib enhances the structural strength of the extension portion, mitigates deformation issues under stress, and improves the battery mounting reliability of the extension portion. Providing a weight-reducing structure reduces the weight of the extension portion, facilitating a lightweight design of the extension portion.

In some embodiments, the battery installation frame includes a plurality of battery mounting spaces spaced apart along the first direction.

In the above technical solution, by configuring the battery installation frame to include a plurality of battery mounting spaces spaced apart along the first direction, the battery installation frame can support the mounting of multiple batteries in the first direction, thereby achieving a multi-battery mounting function. This increases the driving range per battery swap of the vehicle and reduces the frequency of battery swaps per unit mileage. Furthermore, when the battery installation frame is installed on the vehicle frame with the first direction aligned with the length direction of the vehicle, the plurality of battery mounting spaces arranged along the first direction allow the battery installation frame to support mounting of multiple batteries along the length direction of the vehicle. Consequently, the number of batteries that can be installed on the vehicle increases, thereby improving the driving range per battery swap of the vehicle.

In some embodiments, at least one of the extension portions is a shared extension portion, and two of the battery mounting spaces spaced apart along the first direction are separated by the shared extension portion.

In the above technical solution, when the number of battery mounting spaces spaced apart along the first direction is fixed, the number of extension portions spaced apart along the first direction can be reduced, thereby reducing costs and the vehicle load.

In some embodiments, battery mounting structures are arranged on both sides of the shared extension portion facing the battery mounting spaces on both sides.

In the above technical solution, by arranging battery mounting structures on both sides of the shared extension portion facing the battery mounting spaces on both sides, the difficulty of arranging the battery mounting structures is reduced.

In some embodiments, the battery mounting structures on both sides of the shared extension portion have misaligned orthogonal projections on a projection plane perpendicular to the first direction.

In the above technical solution, by configuring the battery mounting structures on both sides of the shared extension portion to have misaligned orthogonal projections on a projection plane perpendicular to the first direction, the stress distribution on the shared extension portion is more balanced. When batteries in the battery mounting spaces on both sides of the shared extension portion are connected to their respective battery mounting structures on both sides, stress concentration is reduced, preventing deformation, fracture, or other problems of the shared extension portion, thereby extending the service life of the shared extension portion and enhancing the battery mounting reliability.

In some embodiments, the extension portions on both sides of the battery mounting space in the first direction are provided with battery mounting structures.

In the above technical solution, the extension portions on both sides of the battery mounting space in the first direction can support the battery within the battery mounting space, and the battery mounting structures on both sides can distribute the load, reducing stress concentration that may cause deformation or fracture of the extension portions, thereby extending the service life of the extension portions and enhancing the battery mounting reliability.

In some embodiments, the battery mounting structures on both sides of the battery mounting space in the first direction have misaligned orthogonal projections on a projection plane perpendicular to the first direction.

In the above technical solution, by configuring the battery mounting structures on both sides of the battery mounting space to have misaligned orthogonal projections on a projection plane perpendicular to the first direction, the load is more effectively distributed between the battery mounting structures on both sides, mitigating stress concentration that may cause deformation or fracture of the extension portions. Additionally, when the shared extension portion has battery mounting structures on both sides in the first direction, the battery mounting structures on both sides of the shared extension portion have misaligned orthogonal projections on a plane perpendicular to the first direction, and the battery mounting structures on both sides of the battery mounting space in the first direction also have misaligned orthogonal projections on the plane perpendicular to the first direction, the plurality of extension portions can be constructed with identical structures, simplifying the structure, facilitating processing, reducing costs, and improving assembly efficiency.

In some embodiments, a plurality of extension portions defining a plurality of battery mounting spaces spaced apart along the first direction are connected to the same main body portion.

In the above technical solution, a single main body portion can be used to connect a plurality of extension portions spaced apart along the first direction, reducing the assembly difficulty of the plurality of extension portions.

In some embodiments, on both sides in the second direction, the main body portion is connected to a plurality of extension portions spaced apart along the first direction.

In the above technical solution, by configuring the main body portion to be connected, on both sides in the second direction, to a plurality of extension portions spaced apart along the first direction, the main body portion can accommodate and protect batteries on both sides in the second direction. When the extension portions are provided with battery mounting structures, the main body portion additionally gains the capability to mount batteries on both sides in the second direction, fully utilizing the dimension of the battery installation frame in the second direction to increase the number of batteries that can be mounted on the battery installation frame, thereby maximizing the use of space of the battery installation frame in the second direction and enhancing the driving range per battery swap of the vehicle.

In some embodiments, the extension portions on both sides of the main body portion are arranged in a one-to-one correspondence along the second direction, where the two extension portions arranged in a one-to-one correspondence have identical lengthwise extension directions and have coinciding orthogonal projections along the lengthwise extension directions of the extension portions.

In the above technical solution, through the foregoing configuration, battery mounting spaces defined by corresponding extension portions on both sides of the main body portion in the second direction have identical dimensions and corresponding positions. Consequently, in a case that a large-sized battery with a regular shape is installed on the battery installation frame, both lateral portions of the battery can respectively coordinate with two battery mounting spaces correspondingly arranged on both sides of the main body portion in the second direction. This enables the two corresponding battery mounting spaces on both sides of the main body portion to be jointly used for mounting a single large-sized battery, thereby improving the energy density of the installed battery. Additionally, when the extension portions are provided with battery mounting structures, the two extension portions corresponding in position along the second direction can respectively support both sides of the large-sized battery, improving the load balance and mounting stability of the battery.

In some embodiments, the main body portion includes a beam clearance slot, and the beam clearance slot has an opening running through in the first direction.

In the above technical solution, by providing the beam clearance slot with an opening running through in the first direction, a portion of the vehicle beam can extend into the beam clearance slot. Thereby, this allows the beam clearance slot to provide clearance for the vehicle beam, preventing interference between the battery installation frame and the vehicle beam, improving assembly compactness between the battery installation frame and the vehicle beam and facilitating the use of space near the vehicle beam to arrange batteries, thereby increasing the dimension and dimensional energy density of the battery.

In some embodiments, the main body portion includes a first main wall and two second main walls, where the two second main walls are both arranged along the first direction and respectively connected to both ends of the first main wall in the second direction, forming the beam clearance slot with an open top between the two second main walls and the first main wall.

In the above technical solution, by configuring both the two second main walls to be arranged along the first direction and respectively connected to both ends of the first main wall in the second direction, the beam clearance slot is defined to extend along the first direction, and forming a beam clearance slot with an open top between the first main wall and the two second main walls facilitates reducing the design and molding difficulty of the beam clearance slot and lowering the assembly difficulty of the battery installation frame to the vehicle frame.

In some embodiments, the extension portion is connected to the second main wall and is located on a side of the second main wall away from the first main wall in the second direction.

In the above technical solution, by configuring the extension portion to connect to the second main wall, interference between the extension portion and the vehicle beam can be avoided while the length occupied by the extension portion in the second direction is increased, thereby facilitating expansion of the battery mounting space in the second direction. Moreover, this facilitates the connection between the extension portion and the main body portion.

In some embodiments, at least one of the main body portion and the extension portion is provided with a beam connection structure.

In the above technical solution, since the main body portion coordinates with the vehicle beam through the beam clearance slot, both the main body portion and the extension portion can have portions close to the vehicle beam. By arranging the beam connection structure to connect to the vehicle beam, the battery installation frame can be conveniently installed to the vehicle frame.

According to a second aspect, this application provides a frame assembly including a vehicle frame and the battery installation frame according to any one of the above embodiments, where the battery installation frame is configured for installing a battery to the vehicle frame, and the height direction of the extension portion is the height direction of the vehicle frame.

In the above technical solution, when the battery is installed to the vehicle frame through the battery installation frame, the battery mounting space in the height direction of the vehicle frame is expanded, facilitating the mounting of batteries with larger height dimensions on the battery installation frame, thereby increasing the driving range per battery swap of the vehicle.

In some embodiments, the battery installation frame is arranged at the bottom of the vehicle frame, the vehicle frame includes a vehicle beam, at least one side of the vehicle beam in a width direction is provided with the extension portion, and at least a portion of the extension portion is higher than a bottom surface of the vehicle beam.

In the above technical solution, the bottom space of the vehicle frame can be fully utilized to arrange the extension portion and the battery mounting space, facilitating the mounting of larger-sized batteries on the battery installation frame, thereby increasing the driving range per battery swap of the vehicle.

In some embodiments, both sides of the vehicle beam in the width direction are provided with a plurality of extension portions, and on both sides of the vehicle beam in the width direction, a plurality of battery mounting spaces are arranged along a length direction of the vehicle beam.

In the above technical solution, the battery installation frame can more fully utilize the space on both sides of the vehicle beam in the width direction, facilitating the mounting of larger-sized batteries on the battery installation frame, thereby increasing the driving range per battery swap of the vehicle.

According to a third aspect, this application provides a vehicle including a battery and the frame assembly according to any one of the above embodiments, where at least a portion of the battery is accommodated in the battery mounting space.

In the above technical solution, since the battery mounting space runs through along the height direction of the vehicle, accommodating at least a portion of the battery in the battery mounting space allows for an increase in the height of the battery while ensuring the ground clearance of the battery, thereby increasing the energy density of the battery and the driving range per battery swap of the vehicle.

In some embodiments, the battery includes an upper battery portion and a lower battery portion, the upper battery portion is accommodated in the battery mounting space, the battery is provided with an installation structure at a position between the upper battery portion and the lower battery portion, and the installation structure is detachably connected to the battery mounting structure.

In the above technical solution, when the battery is mounted to the battery installation frame, the upper battery portion can extend into the battery mounting space, utilizing the extension portion to provide some protection to the upper battery portion, reducing the risk of battery damage and extending the service life of the battery. Meanwhile, the height of the extension portion can be less than the height of the battery, reducing the height of the extension portion, thereby reducing the weight and cost of the battery installation frame. Additionally, arranging the installation structure at the position between the upper battery portion and the lower battery portion makes it possible for the battery mounting structure to be located at the lower edge of the extension portion, facilitating battery swapping operations.

In some embodiments, in a spacing direction of the extension portions, a dimension of the upper battery portion is smaller than a dimension of the lower battery portion, forming a stepped surface between the upper battery portion and the lower battery portion, the stepped surface abutting against a bottom of the extension portion.

In the above technical solution, during actual installation of the battery, when the upper battery portion is inserted into the battery mounting space from bottom to top, the abutting of the stepped surface against the bottom of the extension portion can serve to provide an indication of proper assembly to prevent the battery from excessively extending into the battery mounting space and impacting the vehicle chassis, thus protecting the battery. Additionally, configuring the dimension of the lower battery portion to be larger than the dimension of the upper battery portion further increases the dimension of the battery to some extent, thereby further enhancing the dimensional energy density of the battery.

In some embodiments, the battery includes two battery side portions and a battery central portion, where in a width direction of the vehicle frame, the two battery side portions are respectively located on both sides of the battery central portion, a top surface of the battery central portion is lower than a top surface of the battery side portions to form a clearance slot running through along a length direction of the vehicle frame with an open top for avoiding the vehicle beam, and at least one of the battery central portion and the battery side portions is detachably connected to the battery mounting structure.

In the above technical solution, the structure of the battery is designed ingeniously to avoid the vehicle beam, fully utilizing the space on both sides of the vehicle beam in the width direction, allowing the overall dimension of the battery to be increased, thereby enhancing the dimensional energy density of the battery. Additionally, detachably connecting at least one of the battery central portion and the battery side portions to the battery mounting structure enhances the design flexibility of the battery.

The above description is only an overview of the technical solution of this application. In order to more clearly understand the technical means of this application, it can be implemented according to the content of the specification. In order to make the above and other purposes, features and advantages of this application more obvious and easy to understand, the specific implementation methods of this application are specifically cited below.

### BRIEF DESCRIPTION OF DRAWINGS

By reading the detailed description of the preferred embodiments below, various other advantages and benefits will become clear to those of ordinary skill in the art. The drawings are provided solely for illustrating the preferred embodiments and are not considered to limit this application. Throughout the drawings, identical components are denoted by identical reference signs. In the drawings:
FIG. 1 is a schematic structural diagram of a vehicle according to some embodiments of this application;
FIG. 2 is an exploded structural diagram of a battery according to some embodiments of this application;
FIG. 3 is a schematic diagram of the assembly of a frame assembly and a battery according to some embodiments of this application;
FIG. 4 is a schematic structural diagram of a frame assembly according to some embodiments of this application;
FIG. 5 is an enlarged view of portion A in FIG. 4;
FIG. 6 is a schematic diagram of the assembly of a frame assembly and a battery from another perspective according to an embodiment of this application;
FIG. 7 is a schematic diagram of a battery according to an embodiment of this application;
FIG. 8 is an enlarged view of portion B in FIG. 3;
FIG. 9 is a schematic diagram of a battery according to another embodiment of this application;
FIG. 10 is an enlarged partial view of FIG. 3;
FIG. 11 is a schematic diagram of a vehicle according to some embodiments of this application;
FIG. 12 is a bottom view of the vehicle in FIG. 11;
FIG. 13 is a cross-sectional view at E-E in FIG. 12;
FIG. 14 is a cross-sectional view at F-F in FIG. 12;
FIG. 15 is an orthogonal projection view of a battery installation frame according to some embodiments of this application; and
FIG. 16 is a cross-sectional view of a battery installation frame according to some embodiments of this application.

Reference signs: vehicle: 1000; frame assembly: 100; battery installation frame: 10; vehicle beam: 20; longitudinal beam: 201; cross beam: 202; battery: 30; upper battery portion: 30a; lower battery portion: 30b; installation structure: 30c; stepped surface: 30d; battery side portion: 30e; battery central portion: 30f; clearance slot: 30g; case: 301; first portion: 3011; second portion: 3012; battery cell: 302; controller: 40; motor: 50; vehicle frame: 60; main body portion: 1; first direction: X; first main wall: 11; second main wall: 12; beam clearance slot: 13; beam connection structure: 14; extension portion: 2; second direction: Y; height direction of extension portion: Z; shared extension portion: 2a; mounting edge: 21; reinforcing rib: 22; weight-reducing structure: 23; battery mounting structure: 3; battery mounting space: 4; and reinforcing portion: 5.

### DESCRIPTION OF EMBODIMENTS

The embodiments of the technical solutions of this application will be described in detail below with reference to the accompanying drawings. The following embodiments are only used to illustrate the technical solutions of this application more clearly and are not intended to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; the terms "including" and "having" and any variations thereof in the specification, claims, and the above drawing descriptions of this application are intended to cover non-exclusive inclusion.

In the description of the embodiments of this application, technical terms such as "first" and "second" are used only to distinguish different objects and should not be construed as indicating or implying relative importance or implying the number, specific order, or primary-secondary relationship of the indicated technical features. In the description of the embodiments of this application, "a plurality of" means two or more, unless explicitly specified otherwise.

Reference to "embodiments" herein means that specific features, structures, or characteristics described in connection with the embodiments may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may exist, for example, X and/or Y may indicate: X alone, both X and Y, or Y alone. Additionally, the character "/" herein generally indicates an "or" relationship between the associated objects.

In the description of the embodiments of this application, the term "a plurality of" refers to two or more (including two), and similarly, "multiple groups" refers to two or more groups (including two groups), and "multiple pieces" refers to two or more pieces (including two pieces).

In the description of the embodiments of this application, technical terms such as "longitudinal," "transverse," "length," "width," "thickness," "upper," "lower," "front," "rear," "left," "right," "vertical," "horizontal," "top," "bottom," "inner," "outer," and the like, indicating orientation or positional relationships are based on the orientation or positional relationships shown in the drawings, merely for convenience in describing the embodiments of this application and simplifying the description, and do not indicate or imply that the referred device or element must have a specific orientation, be constructed, or operated in a specific orientation, and thus should not be construed as limiting the embodiments of this application.

In the description of the embodiments of this application, unless explicitly specified and limited otherwise, technical terms such as "install," "connect," "connection," "fix," and the like, should be understood broadly, for example, as fixed connections, detachable connections, or integral formations; direct connections, indirect connections through intermediaries, or internal communication or interaction between two elements. Those of ordinary skill in the art can understand the specific meanings of these terms in the embodiments of this application based on specific circumstances.

From the perspective of current market trends, the application of power batteries is becoming increasingly widespread. Power batteries are not only used in energy storage systems such as hydroelectric, thermal, wind, and solar power stations but are also widely applied in electric vehicles such as electric bicycles, electric motorcycles, and electric cars, as well as in military equipment and aerospace fields. As the application areas of power batteries continue to expand, their market demand is also increasing.

In some vehicles of the related art, an installation frame is provided at the vehicle chassis, and power batteries are arranged at the vehicle chassis and installed within the installation frame. The installation frame includes a lower frame and an upper frame, where the upper frame is used to connect to the vehicle frame, and the lower frame is used to hold the battery, with the lower frame and the upper frame being quickly detachable. During battery swap, the lower frame is detached from the bottom of the upper frame, the battery with insufficient charge is removed from the lower frame, a fully charged battery is placed into the lower frame, and then the lower frame is reattached to the upper frame to complete the battery swap. However, the battery swapping efficiency of this installation frame is low, and since the installation frame encases the battery, significant space is occupied in the height direction of the vehicle. Given the limited ground clearance at the vehicle chassis and the need to ensure the ground clearance of the battery, the dimension of the battery in the height direction of the vehicle is restricted, making it difficult to improve the energy density of the battery. Moreover, the installation frame is heavy, increasing the onboard burden of the vehicle.

To address this, this application proposes a battery installation frame, where the battery installation frame includes a plurality of extension portions spaced apart, a battery mounting space running through along a height direction of the extension portions is formed between two adjacent extension portions, and the battery installation frame is provided with a battery mounting structure configured for mounting a battery in the battery mounting space.

When such a battery installation frame is used to mount a battery to a vehicle, since the battery mounting space runs through along the height direction of the extension portions, meaning both ends of the battery mounting space in the height direction of the extension portion are free from structural obstruction by the battery installation frame, when the height direction of the extension portions is aligned with the height direction of the vehicle and the battery is installed in the battery mounting space, the battery installation frame does not occupy space in the height direction of the vehicle. This facilitates increasing the dimension of the battery in the height direction of the vehicle, improving the dimensional energy density of the battery, ensuring the ground clearance of the battery, and maintaining the passability of the vehicle.

Moreover, the battery installation frame is provided with a battery mounting structure for mounting the battery in the battery mounting space, eliminating the need to disassemble the battery installation frame into two parts. Direct connection and disconnection of the battery with the battery mounting structure enable rapid battery swap, thereby improving battery swapping efficiency. Additionally, since the battery mounting space runs through along the height direction of the extension portions, the battery is unobstructed by the battery installation frame on both sides in the height direction of the vehicle, allowing the battery to be directly inserted into the battery mounting space from bottom to top and connected to the battery mounting structure, thus enhancing swap convenience.

Furthermore, configuring the battery mounting space to run through along the height direction of the extension portions ensures no obstruction by the battery installation frame on both sides of the battery in the height direction of the vehicle, facilitating battery heat dissipation and reducing the weight of the battery installation frame, thereby lowering the onboard burden of the battery installation frame. Additionally, the portion of the battery accommodated in the battery mounting space is protected by the two extension portions defining the battery mounting space, improving the operational reliability of the battery.

In short, given the increasing demand for battery placement space and the driving range per battery swap of the vehicle, the battery installation frame of the embodiments of this application can expand the battery mounting space in the height direction of the vehicle, facilitating improved space utilization in the height direction of the vehicle while ensuring the ground clearance of the battery, thereby enhancing the dimensional energy density of the battery and increasing the driving range per battery swap of the vehicle.

The battery disclosed in the embodiments of this application can be used in electrical devices powered by batteries or in various energy storage systems using batteries as energy storage elements. Electrical devices may include, but are not limited to, mobile phones, tablets, laptops, electric toys, electric tools, electric bicycles, electric vehicles, ships, spacecraft, and the like. Electric toys may include fixed or mobile electric toys, such as game consoles, electric car toys, electric ship toys, electric airplane toys, and the like. Spacecraft may include airplanes, rockets, space shuttles, spaceships, and the like.

For convenience of explanation, the following embodiments take a vehicle 1000 as an example.

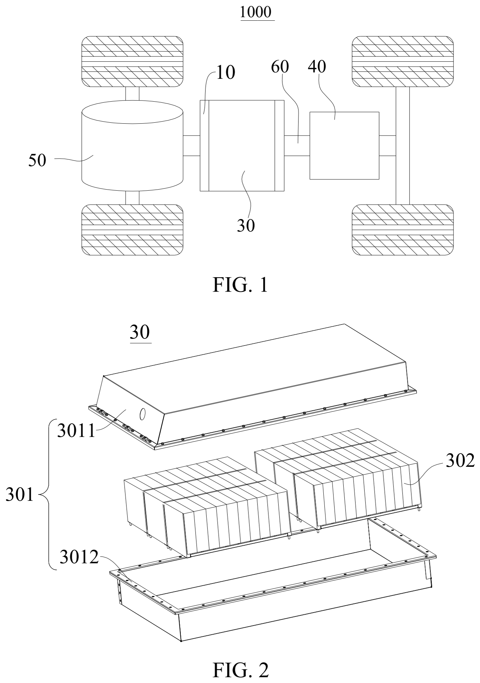

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a pure electric vehicle, a hybrid vehicle, or an extended-range vehicle. The vehicle 1000 is internally provided with a battery 30, where the battery 30 may be arranged at the bottom, front, or rear of the vehicle 1000. The battery 30 may be used for powering the vehicle 1000, for example, as an operational power source for the vehicle 1000. The vehicle 1000 may further include a controller 40 and a motor 50, where the controller 40 is configured to control the battery 30 to supply power to the motor 50, for example, for the operational power requirements during startup, navigation, and driving of the vehicle 1000.

In some embodiments of this application, the battery 30 may serve not only as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery 30 according to some embodiments of this application. The battery 30 includes a case 301 and battery cells 302, with the battery cells 302 accommodated within the case 301. The case 301 is configured to provide an accommodation space for the battery cells 302 and the case 301 may adopt various structures. In some embodiments, referring to FIG. 2, the case 301 may include a first portion 3011 and a second portion 3012, where the first portion 3011 and the second portion 3012 fit each other to define an accommodation space for the battery cells 302. The second portion 3012 may be a hollow structure with an opening, and the first portion 3011 may be a plate-shaped structure, where the first portion 3011 covers the opening of the second portion 3012, such that the first portion 3011 and the second portion 3012 jointly define the accommodation space. Alternatively, both the first portion 3011 and the second portion 3012 may be hollow structures with an opening on one side, with the opening of the first portion 3011 covering the opening of the second portion 3012. The case 301 formed by the first portion 3011 and the second portion 3012 may have various shapes, such as a cylinder, cuboid, and the like.

The battery 30 may include battery cells 302. A plurality of battery cells 302 may be provided. The plurality of battery cells 302 may be connected in series, parallel, or series-parallel configurations, where the series-parallel configuration indicates a combination of both series and parallel connections among the battery cells 302. The plurality of battery cells 302 may be directly connected in series, parallel, or series-parallel configurations, and the resulting assembly of the plurality of battery cells 302 is accommodated within the case 301. Alternatively, the battery 30 may be formed by first connecting the plurality of battery cells 302 in series, parallel, or series-parallel configurations into a form of battery 30 modules, and then connecting the plurality of battery 30 modules in series, parallel, or series-parallel configurations to assemble the battery modules into an integrated unit, and finally accommodating the integrated unit within the case 301. The battery 30 may further include other structures. For example, the battery 30 may include a bus bar for achieving electrical connections between the plurality of battery cells 302.

In this application, the battery cells 302 may include lithium-ion secondary batteries, lithium-ion primary batteries, lithium-sulfur batteries, sodium-lithium-ion batteries, sodium-ion batteries, magnesium-ion batteries, and the like, and the embodiments of this application are not limited thereto. The battery cells 302 may be cylindrical, flat, cuboid, or other shapes, and the embodiments of this application are not limited thereto. Battery cells 302 are generally categorized into three types based on packaging: cylindrical battery cells, prismatic battery cells, and pouch battery cells, and the embodiments of this application are not limited thereto.

The battery cell 302 includes a housing, an electrode assembly, and an electrolyte, where the housing is configured to accommodate the electrode assembly and the electrolyte. The electrode assembly includes a positive electrode plate, a negative electrode plate, and a separator. The battery cell 302 operates primarily by the movement of metal ions between the positive electrode plate and the negative electrode plate. The material of the separator is not limited and may be, for example, polypropylene or polyethylene.

The positive electrode plate generally includes a positive electrode current collector and a positive electrode active material layer, where the positive electrode active material layer is directly or indirectly applied to the positive electrode current collector, and the portion of the positive electrode current collector not coated with the positive electrode active material layer protrudes from the portion of the positive electrode current collector coated with the positive electrode active material layer, serving as a positive electrode tab. For lithium-ion batteries, for example, the material of the positive electrode current collector may be aluminum, and the material of the positive electrode active material layer may be lithium cobalt oxide, lithium iron phosphate, ternary lithium, or lithium manganese oxide, and the like.

The negative electrode plate generally includes a negative electrode current collector and a negative electrode active material layer, where the negative electrode active material layer is directly or indirectly applied to the negative electrode current collector, and the portion of the negative electrode current collector not coated with the negative electrode active material layer protrudes from the portion of the positive electrode current collector coated with the positive electrode active material layer, serving as a negative electrode tab. The material of the negative electrode current collector may be copper, and the material of the negative electrode active material layer may be carbon, silicon, or the like.

To ensure high current passage without fusing, a plurality of positive electrode tabs are provided in a stacked manner, and a plurality of negative electrode tabs are provided in a stacked manner. The electrode assembly may be a wound structure or a stacked structure, and the embodiments of this application are not limited thereto.

As shown in FIG. 1, the embodiments of this application provide a battery installation frame 10, where the battery installation frame 10 is configured for installing a battery 30 to a vehicle frame 60 of a vehicle 1000.

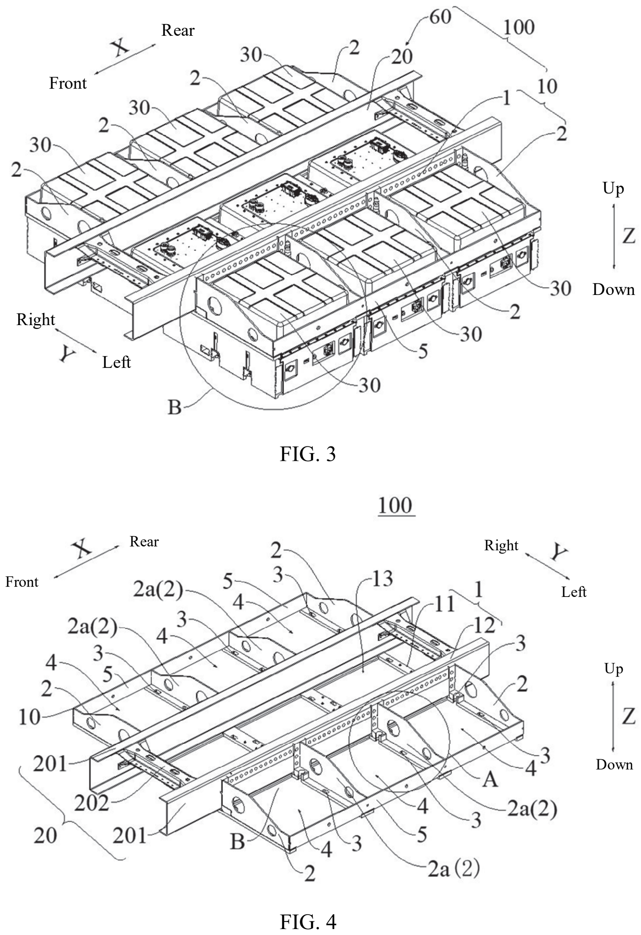

As shown in FIGs. 3 and 4, the battery installation frame 10 includes a plurality of extension portions 2 spaced apart, a battery mounting space 4 running through along a height direction Z of the extension portions 2 is formed between two adjacent extension portions 2, and the battery installation frame 10 is provided with a battery mounting structure 3 configured for mounting the battery 30 in the battery mounting space 4.

It is worth noting that the battery installation frame 10 of the embodiments of this application can be used for battery swap under frame of the vehicle 1000, where battery swap under frame (battery swap under frame) refers to the method of flexibly replacing the battery swapping system installed under the vehicle chassis to replenish the energy of the vehicle. The battery swapping system (battery swapping system) refers to the power battery system (referred to as battery 30 in this application) replaced as a whole during the battery swap process of the vehicle 1000. For example, the battery swapping system generally includes a power battery, a battery management system, a battery swap electrical interface, a battery swap cooling interface, and a battery swap mechanical interface, and can be charged and discharged in a non-vehicle-mounted state. The terms and definitions of the embodiments of this application may refer to GB/T 19596 Terminology of Electric Vehicles.

The phrase "the battery installation frame 10 is provided with a battery mounting structure 3 configured for mounting the battery 30 in the battery mounting space 4" means that the battery installation frame 10 is provided with a battery mounting structure 3 capable of connecting to the battery 30, such that when the battery 30 is connected to the battery mounting structure 3, at least a portion of the battery 30 can be accommodated in the battery mounting space 4, presenting a mounted state. Additionally, the portion of the battery 30 accommodated in the battery mounting space 4 is protected by the two extension portions 2 defining the battery mounting space 4, thereby improving the operational reliability of the battery 30. When the battery installation frame 10 includes a plurality of battery mounting spaces 4, the battery mounting spaces 4 can mitigate issues such as collisions and heat transfer between batteries 30 in adjacent battery mounting spaces 4. Certainly, the battery installation frame 10 may alternatively include only one battery mounting space 4.

The phrase "the battery mounting space 4 runs through along the height direction Z of the extension portions 2" means that both ends of the battery mounting space 4 in the height direction Z of the extension portions 2 are open without obstruction by structures of the battery installation frame 10, where the height direction Z may be perpendicular to a thickness direction (for example, a first direction X shown in FIG. 4) and the length direction (for example, a second direction Y shown in FIG. 4) of the extension portions 2. This improves the space utilization rate of the battery 30 in the height direction Z of the extension portions 2, thereby increasing the dimension of the battery 30 in the height direction Z of the extension portions 2, which is conducive to improving the dimensional energy density of the battery 30.

The battery mounting structure 3 may be arranged on the extension portion 2, or the battery mounting structure 3 may not be arranged on the extension portion 2, and this is not limited herein. The distribution position, number, and structural form of the battery mounting structures 4 can be flexibly designed to meet the mounting strength requirements of large-sized batteries 30. The structures of the battery mounting structures 3 are not limited and may include, but are not limited to, mounting slots, mounting holes, mounting protrusions, mounting pins, mounting screws, and the like, without restriction.

The arrangement direction of the plurality of extension portions 2 spaced apart is not limited. For example, the plurality of extension portions 2 may be spaced apart along the thickness direction of the extension portions 2 (for example, the first direction X shown in FIG. 4), and the thickness direction of the extension portions 2 may be set to be aligned with a width direction of the vehicle 1000, or the thickness direction of the extension portions 2 may be set to be aligned with a length direction of the vehicle 1000, and this is not limited herein. Additionally, the number of extension portions 2 is not limited. For example, two extension portions 2 may be provided, and a battery mounting space 4 is formed between the two extension portions 2, or more extension portions 2 may be provided to define a plurality of battery mounting spaces 4. When a plurality of battery mounting spaces 4 are provided, at least one battery mounting structure 3 may be provided for each battery mounting space 4 to allow a battery 30 to be mounted in each battery mounting space 4.

For example, when the battery installation frame 10 is used to install the battery 30 to the vehicle 1000, the height direction Z of the extension portions 2 is aligned with the height direction of the vehicle 1000. Since the battery mounting space 4 runs through along the height direction Z of the extension portions 2, meaning both ends of the battery mounting space 4 in the height direction Z of the extension portion 2 are free from structural obstruction by the battery installation frame 10, the battery installation frame 10 and the battery mounting structure 3 on the battery installation frame 10 do not occupy space in the height direction of the vehicle when the battery 30 is installed in the battery mounting space 4. This facilitates increasing the dimension of the battery 30 in the height direction of the vehicle and improving the dimensional energy density of the battery 30, thereby increasing the driving range per battery swap of the vehicle, ensuring the ground clearance of the battery 30, and maintaining the passability of the vehicle.

Moreover, the battery installation frame 10 is provided with a battery mounting structure 3 for mounting the battery 30 in the battery mounting space 4, eliminating the need to disassemble the battery installation frame 10 into two parts. Direct connection and disconnection of the battery 30 with the battery mounting structure 3 enable rapid battery swap, thereby improving battery swapping efficiency. Additionally, since the battery mounting space 4 runs through along the height direction Z of the extension portions 2, the battery 30 is unobstructed by the battery installation frame 10 on both sides in the height direction of the vehicle, allowing the battery 30 to be directly inserted into the battery mounting space 4 from bottom to top and connected to the battery mounting structure 3, thus enhancing swap convenience.

Furthermore, configuring the battery mounting space 4 to run through along the height direction Z of the extension portions 2 ensures no obstruction by the battery installation frame 10 on both sides of the battery 30 in the height direction of the vehicle, facilitating battery heat dissipation and reducing the weight of the battery installation frame 10, thereby lowering the onboard burden of the battery installation frame 10. Additionally, the portion of the battery 30 accommodated in the battery mounting space 4 is protected by the two extension portions 2 defining the battery mounting space 4, thereby improving the operational reliability of the battery 30.

In short, given the increasing demand for battery 30 placement space and the driving range per battery swap of the vehicle, the battery installation frame 10 of the embodiments of this application can expand the battery 30 mounting space in the height direction of the vehicle, facilitating improved space utilization in the height direction of the vehicle while ensuring the ground clearance of the battery 30, thereby enhancing the dimensional energy density of the battery 30 and increasing the driving range per battery swap of the vehicle.

In some embodiments, referring to FIG. 4, two extension portions 2 defining the battery mounting space 4 are spaced apart in a first direction X and connected through a main body portion 1, the main body portion 1 is located on one side of the extension portions 2 in a second direction Y, and the first direction X intersects with the second direction Y in a plane perpendicular to the height direction Z of the extension portions 2, where the intersection may be at an acute angle, a right angle, or an obtuse angle.

Thus, the two adjacent extension portions 2 are connected through the main body portion 1, making the structure of the battery installation frame 10 simpler and easier to design, facilitating welding or integral molding.

For example, when the first direction X is the length direction of the vehicle 1000 and the second direction Y is the width direction of the vehicle 1000, the plurality of extension portions 2 are spaced apart along the length direction of the vehicle 1000, enabling full utilization of the space in the length direction of the vehicle 1000 to arrange more extension portions 2, thereby defining a greater number of battery mounting spaces 4 to mount more batteries 30. This increases the height dimension of the battery 30 while also increasing the number of mounted batteries 30, enhancing the driving range per battery swap of the vehicle 1000, reducing the frequency of battery swaps per unit mileage, and minimizing the space occupied by the battery 30 and the battery installation frame 10 in the width direction of the vehicle 1000.

In some embodiments, referring again to FIG. 4, the two extension portions 2 defining the battery mounting space 4 are further connected through a reinforcing portion 5, and the reinforcing portion 5 and the main body portion 1 are disposed on both sides of the extension portions 2 in the second direction Y.

Thus, the two extension portions 2 defining the battery mounting space 4 are connected at both ends in the second direction Y through the main body portion 1 and the reinforcing portion 5, respectively, forming a ring-shaped structure around the battery mounting space 4. This structure has higher strength and enhances the reliability of mounting the battery 30, providing more comprehensive protection to the battery 30 from all sides and allowing flexible positioning of the battery mounting structure 3.

In some embodiments, at least one of the main body portion 1, the extension portion 2, and the reinforcing portion 5 is provided with the battery mounting structure 3.

The phrase "at least one of the main body portion 1, the extension portion 2, and the reinforcing portion 5 is provided with the battery mounting structure 3" includes, but is not limited to, the main body portion 1 being provided with the battery mounting structure 3, the extension portion 2 being provided with the battery mounting structure 3, the reinforcing portion 5 being provided with the battery mounting structure 3, or any two or more of the main body portion 1, the extension portion 2, and the reinforcing portion 5 being provided with the battery mounting structure 3.

Thus, the positioning of the battery mounting structure 3 is more flexible, facilitating the arrangement of the battery mounting structure 3 according to the actual mounting requirements of the battery 30, reducing the difficulty of arranging the battery mounting structure 3, and improving the reliability and convenience of mounting the battery 30.

For example, when the battery installation frame 10 is used to mount the battery 30 to the vehicle 1000, setting the length direction of the vehicle 1000 as the first direction X and arranging the battery mounting structure 3 on the extension portion 2 ensures that neither the battery mounting structure 3 nor the extension portion 2 occupies space of the battery 30 in the width direction of the vehicle 1000. This allows for an increase in the dimension of the battery mounting space 4 in the width direction of the vehicle 1000, enhancing the dimension of the battery 30 in the width direction of the vehicle 1000, which is conducive to improving the dimensional energy density of the battery 30. Moreover, setting the length direction of the vehicle 1000 as the first direction X, given the relatively large length space of the vehicle 1000, is conducive to increasing the dimension or number of battery mounting spaces 4 in the length direction of the vehicle 1000, further enhancing the dimensional energy density or number of batteries 30.

In some embodiments, the battery mounting structure 3 is arranged on a side of the extension portion 2 facing the battery mounting space 4.

Thus, by arranging the battery mounting structure 3 on the side of the extension portion 2 facing the battery mounting space 4, the battery mounting structure 3 corresponds to the battery mounting space 4 it faces and is configured for mounting the battery 30 in that battery mounting space 4. This clarifies the correspondence between the battery mounting structure 3 and the battery mounting space 4, allowing the battery 30 to be inserted into the battery mounting space 4 and connected to the battery mounting structure 3 facing the battery mounting space 4, thereby facilitating battery mounting. Moreover, when a plurality of battery mounting spaces 4 are provided, the battery mounting structures 3 corresponding to different battery mounting spaces 4 are positioned differently and do not interfere with each other, allowing the battery mounting structure 3 corresponding to each battery mounting space 4 to have sufficient space for flexible arrangement. This enables the battery mounting structure 3 to mount the battery 30 more easily and reliably.

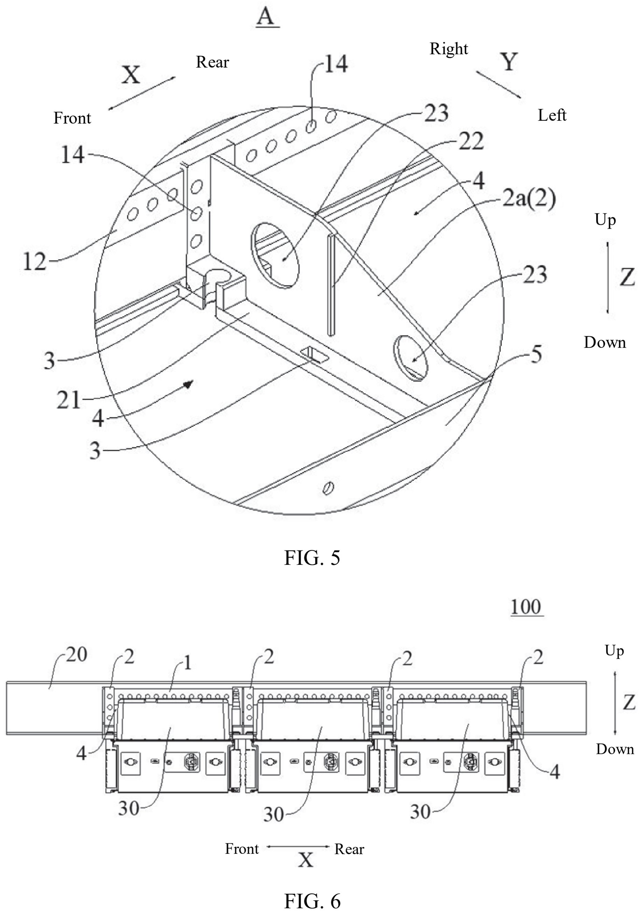

In some embodiments, referring to FIGs. 4 and 5, the extension portion 2 includes a mounting edge 21 protruding into the battery mounting space 4, and the battery mounting structure 3 is located on the mounting edge 21.

Thus, providing the mounting edge 21 facilitates reducing the difficulty of arranging the battery mounting structure 3, easily achieving the positioning of the battery mounting structure 3 on the side of the extension portion 2 facing the battery mounting space 4. Additionally, the mounting edge 21 can provide direct or indirect support to the battery 30, enhancing the mounting stability of the battery 30.

In some embodiments, referring to FIG. 4, a plurality of battery mounting structures 3 are provided, with at least two spaced apart along the second direction Y.

Thus, this facilitates full utilization of the space of the extension portion 2 in the second direction Y, allowing more battery mounting structures 3 to be arranged, thereby enhancing the mounting stability of the battery 30 or increasing the number of batteries 30 mounted in the battery mounting space 4.

In some embodiments, referring to FIG. 4, the extension portion 2 is plate-shaped, with a thickness direction of the extension portion 2 being the first direction X and a length direction of the extension portion 2 being the second direction Y.

Thus, by configuring the extension portion 2 as plate-shaped and defining the first direction X and the second direction Y as described, the battery mounting space 4 can be located on one or both sides of the extension portion 2 in the thickness direction. This allows full use of the length structure characteristics of the extension portion 2 to define the battery mounting space 4, making the space occupied by the extension portion 2 smaller, while the defined battery mounting space 4 is larger.

Additionally, when the number of extension portions 2 allows the battery installation frame 10 have a plurality of battery mounting spaces 4 defined in the thickness direction of the extension portion 2, a distance between two adjacent battery mounting spaces 4 in the thickness direction of the extension portion 2 is the thickness of the extension portion 2, resulting in a smaller gap between adjacent battery mounting spaces 4. This allows for more battery mounting spaces 4 to be arranged in the thickness direction of the extension portion 2, further improving space utilization.

For example, when the thickness direction of the extension portion 2 is aligned with the length direction of the vehicle 1000 and the length direction of the extension portion 2 is aligned with the width direction of the vehicle 1000, the mounting space of the battery 30 can be expanded in both the length and width directions of the vehicle 1000, thereby increasing the driving range per battery swap of the vehicle 1000.

In some embodiments, referring to FIG. 4, a height of the extension portion 2 in the second direction Y decreases in a direction away from the main body portion 1.

It is worth noting that "decreases" may refer to a gradual decrease or a stepped decrease.

Thus, by configuring the height of the extension portion 2 to decrease in the second direction Y away from the main body portion 1, the height of the area of the extension portion 2 away from the main body portion 1 is smaller.

In other words, the height of the end of the extension portion 2 connected to the main body portion 1 is relatively larger, while the height of the end of the extension portion 2 away from the main body portion 1 is relatively smaller, enhancing the connection strength between the extension portion 2 and the main body portion 1, improving the reliability of the extension portion 2 in mounting the battery 30, and reducing the weight of the extension portion 2, thereby lowering the load of the vehicle 1000.

In some embodiments, referring to FIG. 4, the battery mounting structure 3 is arranged at a lower edge of the extension portion 2 in the height direction Z, the lower edge of the extension portion 2 extends along a horizontal line, and an upper edge of the extension portion 2 decreases in a direction away from the main body portion 1. Here, the two ends of the extension portion 2 in the height direction Z are defined as upper and lower ends. When the height direction Z of the extension portion 2 is aligned with the height direction of the vehicle 1000, the two ends of the extension portion 2 in the height direction Z are also the upper and lower ends in the gravitational direction.

Thus, by arranging the battery mounting structure 3 at the lower edge of the extension portion 2 in the height direction Z, with the lower edge of the extension portion 2 extending along a horizontal line, the battery mounting structures 3 are positioned at the same height and relatively low, facilitating the connection between the battery mounting structure 3 and the battery 30, reducing the difficulty of battery 30 mounting, and saving space for battery swapping operations, which is beneficial for increasing the dimension and energy density of the battery.

For example, when a tool moves upward to the position of the battery mounting structure 3 for mounting connection of the battery 30 to the battery mounting structure 3, the raised position of the tool is below the extension portion 2, reducing the lifting height of the tool. Moreover, this eliminates the need for tool insertion between the battery 30 and the extension portion 2, thereby preventing to increase the gap between the battery 30 and the extension portion 2 to accommodate the tool, reducing space waste and allowing the saved space to further increase the dimension of the battery 30. Therefore, this further enhances the dimensional energy density of the battery 30 and facilitates reduced difficulty in battery 30 mounting.

For example, referring to FIGs. 4 and 5, a mounting edge 21 is provided at the lower edge of the extension portion 2. When the battery mounting structure 3 is located at the lower edge of the extension portion 2, it may be arranged on the mounting edge 21. In this case, the lower edge of the extension portion 2 may be configured to extend horizontally, while the upper edge of the extension portion 2 decreases in a direction away from the main body portion 1. It is worth noting that "decreases" may refer to a gradual decrease or a stepped decrease. This ensures that the battery mounting structures 3 are at the same horizontal height, facilitating battery 30 mounting operations.

Meanwhile, the upper edge of the extension portion 2 decreases in a direction away from the main body portion 1, making the height of the end of the extension portion 2 connected to the main body portion 1 relatively larger and the height of the end of the extension portion 2 away from the main body portion 1 relatively smaller, enhancing the connection strength between the extension portion 2 and the main body portion 1, improving the reliability of the extension portion 2 in mounting the battery 30, and reducing the weight of the extension portion 2, thereby lowering the load of the vehicle 1000.

In some embodiments, referring to FIG. 5, the extension portion 2 is provided with a reinforcing rib 22 and/or a weight-reducing structure 23.

Thus, providing a reinforcing rib 22 enhances the structural strength of the extension portion 2, mitigates deformation issues of the extension portion 2 under stress, and improves the reliability of the extension portion 2 in mounting the battery 30.

The reinforcing rib 22 may include, but is not limited to, strip-shaped reinforcing protrusions or localized thickening of the extension portion 2, and the structural form of the reinforcing rib 22 is not limited, for example, it may be linear, curved, or cross-shaped, and is not limited herein.

For example, when the battery 30 is mounted on the battery mounting structure 3 of the extension portion 2, the position of the battery mounting structure 3 experiences concentrated stress and is prone to deformation or damage. Therefore, at least some reinforcing ribs 22 may be arranged corresponding to the battery mounting structure 3, improving the structural strength of the extension portion 2 with fewer reinforcing ribs 22, enhancing the reliability of the extension portion 2 in mounting the battery 30.

For example, when the extension portion 2 is provided with a plurality of battery mounting structures 3, at least some reinforcing ribs 22 are arranged corresponding to the position between two adjacent battery mounting structures 3. When the battery 30 is mounted on the battery mounting structures 3 of the extension portion 2, the positions of the battery mounting structures 3 of the extension portion 2 experience concentrated stress and are prone to deformation or damage. Arranging at least some reinforcing ribs 22 corresponding to the position between two adjacent battery mounting structures 3 enhances the structural strength of the extension portion 2 between the two adjacent battery mounting structures 3, mitigating fracture issues due to stress concentration between two adjacent battery mounting structures 3 and improving the reliability of the extension portion 2 in mounting the battery 30.

Providing a weight-reducing structure 23 reduces the weight of the extension portion 2, facilitating a lightweight design of the extension portion 2. The "weight-reducing structure 23" may include, but is not limited to, weight-reducing holes, weight-reducing slots, or thinning treatments, and the like, and is not limited herein.

Additionally, when the extension portion 2 is provided with both reinforcing ribs 22 and weight-reducing structures 23, the reinforcing ribs 22 increase the weight of the extension portion 2, while the weight-reducing structures 23 reduce the weight, balancing the reliability and lightweight design of the extension portion 2.

In some embodiments, referring to FIGs. 4 and 6, the battery installation frame 10 includes a plurality of battery mounting spaces 4 spaced apart along the first direction X.

Thus, by configuring the battery installation frame 10 to include a plurality of battery mounting spaces 4 spaced apart along the first direction X, the number of battery mounting spaces 4 can be flexibly adjusted by increasing or decreasing the number of extension portions 2, making the battery installation frame 10 highly scalable. The battery 30 can be mounted in the battery mounting space 4 through the battery mounting structure 3, enabling the battery installation frame 10 to mount multiple batteries 30 in the first direction X, achieving a multi-battery mounting function, thereby increasing the driving range per battery swap of the vehicle 1000 and reducing the frequency of battery swaps per unit mileage.

For example, when the battery installation frame 10 is installed to the vehicle frame 60, the first direction X may be set to be aligned with the length direction of the vehicle. Since the battery installation frame 10 defines a plurality of battery mounting spaces 4 arranged along the first direction X, the battery installation frame 10 can mount a plurality of batteries 30 along the length direction of the vehicle, increasing the number of batteries 30 that can be arranged on the vehicle 1000, enhancing the driving range per battery swap of the vehicle 1000 and reducing the frequency of battery swaps per unit mileage.

For example, referring again to FIG. 4, the battery installation frame 10 includes four extension portions 2 spaced apart along the first direction X, the four extension portions 2 define three battery mounting spaces 4, and each of the battery mounting spaces 4 is capable of mounting at least one battery 30. When the battery 30 is mounted on the battery mounting structure 3, at least a portion of the battery 30 is located in the battery mounting space 4, and the two adjacent extension portions 2 serve as outer walls of the battery mounting space 4, providing some protection to the battery 30, reducing damages to the battery 30, and improving the reliability of the battery 30 in supplying power to the vehicle 1000.

Certainly, the number of battery mounting spaces 4 described above is only for illustrative purposes. For example, the battery installation frame 10 may have two, three, five, or more battery mounting spaces 4 arranged in the first direction X, depending on the specific requirements of the vehicle 1000.

Additionally, the number of extension portions 2 may not necessarily be only one more than the number of battery mounting spaces 4. For example, three battery mounting spaces 4 may be defined by five or six extension portions 2. However, it is understood that when the number of extension portions 2 is only one more than the number of battery mounting spaces 4, the use of extension portions 2 can be minimized, reducing the cost and weight of the battery installation frame 10.

In some embodiments, referring to FIG. 4, at least one of the extension portions 2 is a shared extension portion 2a, and two of the battery mounting spaces 4 spaced apart along the first direction X are separated by the shared extension portion 2a.

It is worth noting that "at least one of the extension portions 2 is a shared extension portion 2a" means that among the plurality of extension portions 2 spaced apart along the first direction X, at least one of the extension portions 2, excluding the two extension portions 2 at both ends, is a shared extension portion 2a. For example, when four extension portions 2 are spaced apart along the first direction X, at least one of the two middle extension portions 2 is a shared extension portion 2a. Two of the battery mounting spaces 4 arranged adjacent along the first direction X are separated by the shared extension portion 2a.

Thus, when the number of battery mounting spaces 4 spaced apart along the first direction X is fixed, the number of extension portions 2 spaced apart along the first direction X can be reduced, thereby reducing costs and the load of the vehicle 1000. For example, in the minimal case, the number of extension portions 2 spaced apart in the first direction X may be one more than the number of battery mounting spaces 4, meaning only one extension portion 2 is arranged between two adjacent battery mounting spaces 4 in the first direction X, facilitating cost and load reduction of the vehicle 1000.

However, this application is not limited to this. For example, two extension portions 2 may be arranged between two adjacent battery mounting spaces 4 in the first direction X. In this configuration, each extension portion 2 may be arranged with a battery mounting structure 3 corresponding only to a battery mounting space 4 on one side of the extension portion 2, reducing the load-bearing force exerted by the battery 30 on each extension portion 2, and improving the reliability of mounting the battery 30.

In some embodiments, battery mounting structures 3 are arranged on both sides of the shared extension portion 2a facing the battery mounting spaces 4 on both sides.

Thus, by arranging battery mounting structures 3 on both sides of the shared extension portion 2a facing the battery mounting spaces 4 on both sides, the difficulty of arranging the battery mounting structures 3 is reduced.

In some embodiments, the battery mounting structures 3 on both sides of the shared extension portion 2a have misaligned orthogonal projections on a projection plane perpendicular to the first direction X. For example, the distance from any battery mounting structure 3 on one side of the shared extension portion 2a to the main body portion 1 in the second direction Y is different from the distance from any battery mounting structure 3 on the other side of the shared extension portion 2a to the main body portion 1 in the second direction Y.

Thus, by configuring the battery mounting structures 3 on both sides of the shared extension portion 2a to have misaligned orthogonal projections on a projection plane perpendicular to the first direction X, the stress distribution on the shared extension portion 2a is more balanced. When batteries 30 in the battery mounting spaces 4 on both sides of the shared extension portion 2a are connected to the battery mounting structures 3 on respective sides of the shared extension portion 2a, stress concentration is reduced, preventing deformation, fracture, or other problems of the shared extension portion 2a, thereby extending the service life of the shared extension portion 2a and enhancing the reliability of mounting the batteries 30.

In some embodiments, referring again to FIG. 4, the extension portions 2 on both sides of the battery mounting space 4 in the first direction X are provided with battery mounting structures 3.

Thus, both sides of the battery 30 mounted in the battery mounting space 4 can be connected to the battery mounting structures 3 of the extension portions 2 on respective sides of the battery mounting space 4 in the first direction X, allowing the extension portions 2 on both sides of the battery mounting space 4 in the first direction X to support the battery 30 within the battery mounting space 4. The battery mounting structures 3 on both sides can distribute the load, reducing stress concentration that may cause deformation or fracture of the extension portions 2, extending the service life of the extension portions 2 and enhancing the reliability of mounting the battery 30.

In some embodiments, the battery mounting structures 3 on both sides of the battery mounting space 4 in the first direction X have misaligned orthogonal projections on a projection plane perpendicular to the first direction X. For example, the distance from any battery mounting structure 3 on one side of the battery mounting space 4 to the main body portion 1 in the second direction Y is different from the distance from any battery mounting structure 3 on the other side of the battery mounting space 4 to the main body portion 1 in the second direction Y.

Thus, by configuring the battery mounting structures 3 on both sides of the battery mounting space 4 to have misaligned orthogonal projections on a projection plane perpendicular to the first direction X, the load is more effectively distributed between the battery mounting structures 3 on both sides, mitigating stress concentration that may cause deformation or fracture of the extension portions 2.

Additionally, when the shared extension portion 2a has battery mounting structures 3 on both sides in the first direction X, the battery mounting structures 3 on both sides of the shared extension portion 2a in the first direction X have misaligned orthogonal projections on a plane perpendicular to the first direction X, and the battery mounting structures 3 on both sides of the battery mounting space 4 in the first direction X also have misaligned orthogonal projections on the plane perpendicular to the first direction, the plurality of extension portions 2 can be constructed with identical structures, simplifying the structure, facilitating processing, reducing costs, and improving assembly efficiency.

In some embodiments, referring again to FIG. 4, a plurality of extension portions 2 defining a plurality of battery mounting spaces 4 spaced apart along the first direction X are connected to the same main body portion 1.

Thus, a single main body portion 1 can be used to connect a plurality of extension portions 2 spaced apart along the first direction X, reducing the assembly difficulty of the plurality of extension portions 2. For example, when the battery installation frame 10 is installed to the vehicle frame 60, fixing the main body portion 1 to the vehicle frame 60 allows the plurality of extension portions 2 to reach their operational positions, reducing the difficulty of using the battery installation frame 10.

In some embodiments, referring again to FIG. 4, on both sides in the second direction Y, the main body portion 1 is connected to a plurality of extension portions 2 spaced apart along the first direction X.

Thus, by configuring the main body portion 1 to be connected, on both sides in the second direction Y, to a plurality of extension portions 2 spaced apart along the first direction X, the main body portion 1 can accommodate and protect batteries 30 on both sides in the second direction Y. When the extension portions 2 are provided with battery mounting structures 3, the main body portion 1 additionally gains the capability to mount batteries 30 on both sides in the second direction Y, fully utilizing the dimension of the battery installation frame 10 in the second direction Y to increase the number of batteries 30 that can be mounted on the battery installation frame 10, maximizing the use of space of the battery installation frame 10 in the second direction Y and enhancing the driving range per battery swap of the vehicle 1000.

For example, when the battery installation frame 10 is installed to the vehicle frame 60, the main body portion 1 may be fixed to a vehicle beam 20 of the vehicle frame 60, with the first direction X being the length direction of the vehicle beam 20 and the second direction Y being the width direction of the vehicle beam 20, allowing batteries 30 to be distributed on both sides of the vehicle beam 20, enabling the battery installation frame 10 to have a dual-sided mounting space configuration.

In some embodiments, as shown in FIGs. 3 and 4, the extension portions 2 on both sides of the main body portion 1 are arranged in a one-to-one correspondence along the second direction Y, where the two extension portions 2 arranged in a one-to-one correspondence have identical lengthwise extension directions and have coinciding orthogonal projections along the lengthwise extension directions of the extension portions 2.

Thus, the battery mounting spaces 4 defined by the extension portions 2 on both sides of the main body portion 1 in the second direction Y have identical dimensions and are symmetrically aligned. As a result, when the battery mounting frame 10 is used to install a large-sized and regularly shaped battery 30, the two sides of the battery 30 can respectively coordinate with the two corresponding battery mounting spaces 4 arranged on both sides of the main body portion 1 in the second direction Y. This allows the two correspondingly arranged battery mounting spaces 4 on both sides of the main body portion 1 to jointly accommodate a single large-sized battery 30, thereby improving the energy density of the installed battery 30. Additionally, when the extension portions 2 are provided with battery mounting structures 3, the two extension portions 2 corresponding in position along the second direction Y can respectively support both sides of the large-sized battery 30, improving the load balance and mounting stability of the battery 30.

In some embodiments, referring to FIGs. 3 and 4, the main body portion 1 includes a beam clearance slot 13, and the beam clearance slot 13 has an opening running through in the first direction X. For example, the first direction X may be set to be aligned with the length direction of the vehicle beam 20.

Thus, by providing the beam clearance slot 13 with an opening running through in the first direction X, a portion of the vehicle beam 20 can extend into the beam clearance slot 13, allowing the beam clearance slot 13 to avoid interference between the battery installation frame 10 and the vehicle beam 20, improving the compactness of coordination between the battery installation frame 10 and the vehicle beam 20, and facilitating the use of space near the vehicle beam 20 to arrange batteries 30, thereby increasing the dimension and dimensional energy density of the battery 30.

In some embodiments, referring to FIGs. 4 and 5, the main body portion 1 includes a first main wall 11 and two second main walls 12, the two second main walls 12 are both arranged along the first direction X and respectively connected to both ends of the first main wall 11 in the second direction Y, forming the beam clearance slot 13 with an open top between the two second main walls 12 and the first main wall 11.

Thus, by configuring both the two second main walls 12 to be arranged along the first direction X (that is, the length direction of the second main walls 12 aligns with the first direction X) and connecting the two second main walls 12 respectively to both ends of the first main wall 11 in the second direction Y, the beam clearance slot 13 is defined to extend along the first direction X. Moreover, forming the beam clearance slot 13 with an open top between the two second main walls 12 and the first main wall 11 facilitates reducing the design and molding difficulty of the beam clearance slot 13.

Additionally, since the beam clearance slot 13 has an open top, the main body portion 1 can be pushed upward from bottom to top, allowing the vehicle beam 20 to enter the beam clearance slot 13, facilitating reduced assembly difficulty of the battery installation frame 10 to the vehicle frame 60. For a vehicle frame 60 that has already been assembled, the battery installation frame 10 can be subsequently installed, making the battery installation frame 10 suitable for various vehicle models. This application is not limited to this; for example, in other embodiments of this application, the beam clearance slot 13 may be configured with an open bottom, allowing assembly of the battery installation frame 10 to the vehicle frame 60 during the assembly process of the vehicle frame 60.

In some embodiments, referring to FIGs. 4 and 5, the extension portion 2 is connected to the second main wall 12. For example, all the extension portions 2 are connected to a side of the second main wall 12 away from the first main wall 11 in the second direction Y.

Thus, arranging the extension portion 2 to connect to the second main wall 12 avoids interference between the extension portion 2 and the vehicle beam 20 while increasing the length occupied by the extension portion 2 in the second direction Y, thereby expanding the battery mounting space 4 in the second direction Y and facilitating the connection between the extension portion 2 and the main body portion 1.

Specifically, the connection method between the extension portion 2 and the second main wall 12 is not limited and may include, for example, welding or integral molding. Similarly, the connection method between the first main wall 11 and the second main wall 12 is not limited and may include, for example, welding or integral molding.

In some embodiments, referring to FIGs. 4 and 5, at least one of the main body portion 1 and the extension portion 2 is provided with a beam connection structure 14.

For example, the beam connection structure 14 may be arranged on the main body portion 1, or the beam connection structure 14 may be arranged on the extension portion 2, or the beam connection structure 14 may be arranged on both the main body portion 1 and the extension portion 2. The specific structure of the beam connection structure 14 is not limited and may include, for example, threaded holes, connection holes, or snap-fit structures.

Thus, since the main body portion 1 coordinates with the vehicle beam 20 through the beam clearance slot 13, both the main body portion 1 and the extension portion 2 can have portions close to the vehicle beam 20. Arranging the beam connection structure 14 to connect to the vehicle beam 20 facilitates installation of the battery installation frame 10 to the vehicle frame 60.

In some embodiments, a side of the extension portion 2 facing the battery mounting space 4 is provided with at least one of a thermal insulation structure, a heat dissipation structure, and a cushioning structure.

In the above technical solution, providing a thermal insulation structure helps insulate the battery 30, mitigating heat transfer effects between adjacent batteries 30. The thermal insulation structure may include, but is not limited to, thermal insulation cotton, thermal insulation film, or other thermal insulation structures, and is not limited herein.

Providing a heat dissipation structure facilitates heat dissipation of the battery 30, reducing the risk of overheating and thermal runaway. The heat dissipation structure may include, but is not limited to, a radiator, a cooler, a fan, or other heat dissipation structures, and is not limited herein.

Providing a cushioning structure helps cushion the battery 30, mitigating rigid contact between the battery 30 and the cushioning portion, thereby protecting the battery 30 and extending the service life of the battery 30. The cushioning structure may include, but is not limited to, sponge, rubber components, elastic components, or other cushioning structures, and is not limited herein.

According to a second aspect, referring to FIGs. 3 and 4, this application provides a frame assembly 100 including a vehicle frame 60 and the battery installation frame 10 according to any one of the above embodiments. The battery installation frame 10 is configured for installing a battery 30 to the vehicle frame 60, and the height direction Z of the extension portion 2 is the height direction of the vehicle frame 60, where the height direction of the vehicle frame 60 is the height direction of the vehicle 1000.

The battery installation frame 10 is installed to the vehicle frame 60, and the battery 30 is connected to the battery mounting structure 3 to achieve assembly of the battery 30 to the battery installation frame 10, thereby allowing the battery installation frame 10 to serve to install the battery 30 to the vehicle frame 60.

Thus, when the battery 30 is installed to the vehicle frame 60 through the battery installation frame 10, the battery mounting space 4 of the battery 30 in the height direction of the vehicle frame 60 is expanded, facilitating the mounting of batteries 30 with larger height dimensions on the battery installation frame 10, thereby increasing the driving range per battery swap of the vehicle 1000.

In some embodiments, referring to FIGs. 3 and 4, the battery installation frame 10 is arranged at the bottom of the vehicle frame 60 (that is, located at the bottom of the vehicle 1000), the vehicle frame 60 includes a vehicle beam 20, at least one side of the vehicle beam 20 in a width direction is provided with the extension portion 2, and at least a portion of the extension portion 2 is higher than a bottom surface of the vehicle beam 20 in the height direction of the vehicle beam 60. In the embodiments of this application, the length direction of the vehicle frame 60, the length direction of the vehicle 1000, and the length direction of the vehicle beam 20 are consistent, and the width direction of the vehicle frame 60, the width direction of the vehicle 1000, and the width direction of the vehicle beam 20 are consistent.

Thus, the battery mounting space 4 is not entirely below the vehicle beam 20 but is at least partially higher than the bottom surface of the vehicle beam 20 and located on at least one side of the vehicle beam 20 in the width direction, allowing full utilization of the bottom space of the vehicle frame 60 to arrange the extension portion 2 and the battery mounting space 4, facilitating the mounting of larger-sized batteries 30 on the battery installation frame 10, thereby increasing the driving range per battery swap of the vehicle 1000.

The vehicle beam 20 refers to an intermediate beam located at the bottom of the vehicle 1000 and extending along the length direction of the vehicle 1000, also known as the underbody main beam of the vehicle. It is worth noting that the specific configuration of the vehicle beam 20 according to the embodiments of this application is not limited. For example, referring to FIGs. 3 and 4, the vehicle beam 20 may include two longitudinal beams 201 extending along the length direction of the vehicle 1000 (for example, the first direction X shown in FIG. 4) and at least one cross beam 202 extending along the width direction of the vehicle 1000 (for example, the second direction Y shown in FIG. 4), with the two longitudinal beams 201 spaced apart along the width direction of the vehicle 1000, and the cross beam 202 connecting between the two longitudinal beams 201.

In some embodiments, referring to FIGs. 3 and 4, on both sides of the vehicle beam 20 in the width direction, a plurality of extension portions 2 are provided, and on both sides of the vehicle beam 20 in the width direction, a plurality of battery mounting spaces 4 are arranged along the length direction of the vehicle beam 20. Thus, the battery installation frame 10 can more fully utilize the space on both sides of the vehicle beam 20 in the width direction, facilitating the mounting of more batteries 30, further increasing the driving range per battery swap of the vehicle 1000.

Additionally, it is worth noting that the battery installation frame 10 may be connected to the vehicle beam 20 but is not limited to being connected to the vehicle beam 20; for example, the battery installation frame 10 may alternatively be connected to other components of the vehicle frame 60.

According to a third aspect, this application provides a vehicle 1000 including a battery 30 and the frame assembly 100 according to any one of the above embodiments, where referring to FIGs. 3 and 4, at least a portion of the battery 30 is accommodated in the battery mounting space 4.

Thus, since the battery mounting space 4 runs through along the height direction of the vehicle 1000, accommodating at least a portion of the battery 30 in the battery mounting space 4 allows for an increase in the height of the battery 30 while ensuring the ground clearance of the battery 30, thereby increasing the energy density of the battery 30 and the driving range per battery swap of the vehicle 1000.

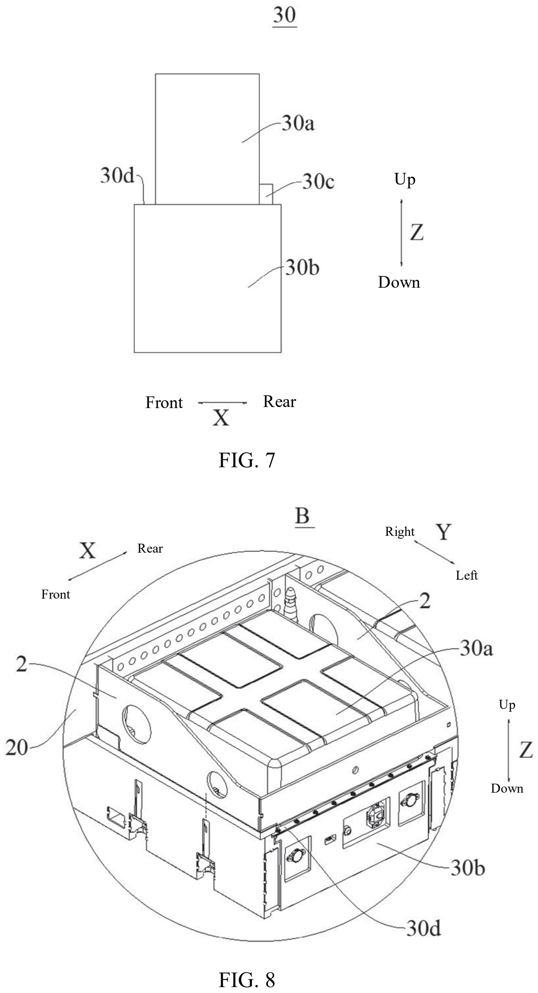

In some embodiments, referring to FIGs. 7 and 8, the battery 30 includes an upper battery portion 30a and a lower battery portion 30b, the upper battery portion 30a is accommodated in the battery mounting space 4, the battery 30 is provided with an installation structure 30c at a position between the upper battery portion 30a and the lower battery portion 30b, and the installation structure 30c is detachably connected to the battery mounting structure 3.

Thus, when the battery 30 is mounted to the battery installation frame 10, the upper battery portion 30a can extend into the battery mounting space 4, utilizing the extension portion 2 to provide some protection to the upper battery portion 30a, reducing the risk of damages to the battery 30 and extending the service life of the battery 30. Meanwhile, the height of the extension portion 2 can be less than the height of the battery 30, reducing the height of the extension portion 2, thereby reducing the weight and cost of the battery installation frame 10. Additionally, arranging the installation structure 30c at the position between the upper battery portion 30a and the lower battery portion 30b makes it possible for the battery mounting structure 3 to be located at the lower edge of the extension portion 2, facilitating battery swapping operations. The detachable connection between the installation structure 30c and the battery mounting structure 3 reduces the replacement difficulty of the battery 30, improving battery swapping efficiency.

The connection method between the installation structure 30c and the battery mounting structure 3 includes, but is not limited to, bolted connection, snap-fit connection, plug-in connection, magnetic attraction connection, or the like.

In some embodiments, referring to FIGs. 7 and 8, in the spacing direction of the extension portions 2, that is, the spacing direction of two adjacent extension portions 2 (for example, the first direction X), a dimension of the upper battery portion 30a is smaller than a dimension of the lower battery portion 30b, forming a stepped surface 30d between the upper battery portion 30a and the lower battery portion 30b, the stepped surface 30d abutting against a bottom of the extension portion 2, such that at least a portion of the upper battery portion 30a extends into the battery mounting space 4, and the lower battery portion 30b is located outside the battery mounting space 4.

It is worth noting that the stepped surface 30d abutting against the bottom of the extension portion 2 is understood broadly, meaning the stepped surface 30d may be in direct contact with the extension portion 2 to achieve an abutting effect or in indirect contact to achieve an abutting effect. For example, the battery mounting structure 3 may be arranged at the lower position of the extension portion 2, and the installation structure 30c may be arranged on the stepped surface 30d, such that when the installation structure 30c coordinates with the battery mounting structure 3, the stepped surface 30d abuts against the bottom of the extension portion 2.

Thus, during actual installation of the battery 30, when the upper battery portion 30a is inserted into the battery mounting space 4 from bottom to top, the abutting of the stepped surface 30d against the bottom of the extension portion 2 can serve to provide an indication of proper assembly to prevent the battery 30 from excessively extending into the battery mounting space 4 and impacting the vehicle chassis, thus protecting the battery 30. Additionally, configuring the dimension of the lower battery portion 30b to be larger than the dimension the upper battery portion 30a further increases the dimension of the battery 30 to some extent, thereby further enhancing the dimensional energy density of the battery 30.

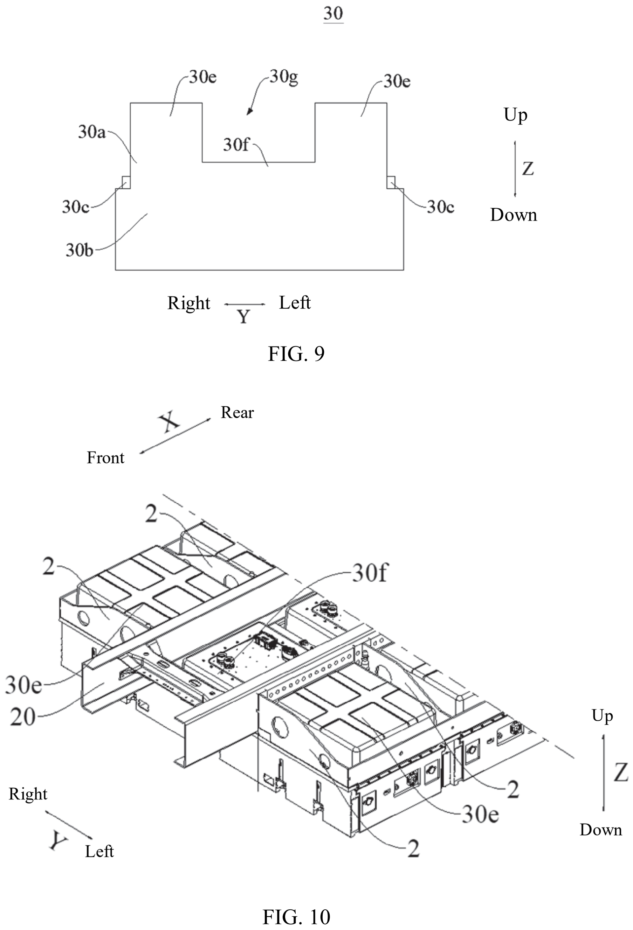

In some embodiments, referring to FIGs. 9 and 10, the battery 30 includes two battery side portions 30e and a battery central portion 30f, where in the width direction of the vehicle frame 60, the two battery side portions 30e are respectively located on both sides of the battery central portion 30f, a top surface of the battery central portion 30f is lower than a top surface of the battery side portions 30e to form a clearance slot 30g running through along a length direction of the vehicle frame 60 with an open top for avoiding the vehicle beam 20, and at least one of the battery central portion 30f and the battery side portions 30e is detachably connected to the battery mounting structure 3.

The phrase "at least one of the battery central portion 30f and the battery side portions 30e is detachably connected to the battery mounting structure 3" includes: the battery side portion 30e being detachably connected to the battery mounting structure 3, the battery central portion 30f being detachably connected to the battery mounting structure 3, or both the battery side portion 30e and the battery central portion 30f being detachably connected to respective battery mounting structures 3.

The detachable connection of the battery side portion 30e to the battery mounting structure 3 may be achieved through an installation structure 30c on the battery side portion 30e, and the position of the installation structure 30c on the battery side portion 30e is not limited. For example, the installation structure 30c may be located at the middle, upper, or lower part of the battery side portion 30e.

The detachable connection of the battery central portion 30f to the battery mounting structure 3 may be achieved through an installation structure 30c on the battery central portion 30f, and the position of the installation structure 30c on the battery central portion 30f is not limited. For example, the installation structure 30c may be located at the middle, upper, or lower part of the battery central portion 30f.

The connection method between the battery side portion 30e and/or the battery central portion 30f and the battery mounting structure 3 through the installation structure 30c includes, but is not limited to, bolted connection, snap-fit connection, plug-in connection, magnetic attraction connection, or the like.

Thus, the battery 30 is designed ingeniously to avoid the vehicle beam 20, fully utilizing the space on both sides of the vehicle beam 20 in the width direction, allowing the overall dimension of the battery 30 to be increased, thereby enhancing the dimensional energy density of the battery 30. Additionally, detachably connecting at least one of the battery central portion 30f and the battery side portions 30e to the battery mounting structure 3 enhances the design flexibility of the battery 30. When both battery side portions 30e are connected to the battery mounting structure 3, or when both the battery side portion 30e and the battery central portion 30f are connected to the battery mounting structure 3, the installation stability of the battery 30 is improved.

For example, referring to FIG. 10, at least a portion of the vehicle beam 20 is located within the clearance slot 30g and above the battery central portion 30f, and the two battery side portions 30e may be respectively located on both sides of the vehicle beam 20 in the width direction, enabling full utilization of the space on both sides of the vehicle beam 20 in the width direction to arrange a larger-sized battery 30.

It is worth noting that the configuration of the battery 30 in the embodiments of this application is not limited to this. For example, the battery 30 may include only one battery side portion 30e, or the battery 30 may include both the battery central portion 30f and one battery side portion 30e, and the like.

In recent years, in applications such as logistics, docks, and mines, battery swap has become an important method for replenishing energy for pure electric commercial vehicles, and the construction of battery swapping stations has been accelerating. To ensure universal interchangeability in battery swap, battery swapping facilities such as swap stations and charging equipment need to be fully utilized, reducing resource waste.

This application proposes some embodiments related to underbody battery swap to improve compatibility and interchangeability. However, the following embodiments are not limited to pure electric vehicles, and may also be applied to other types of battery-swap vehicles.

In some embodiments, the operating voltage range of the battery swapping system is 400 V to 750 V.

In some embodiments, the flatness of the battery swapping interface of the battery swapping system is ≤ 4 mm. Specifically, the contact interface between the battery swapping system and the battery installation frame should be a single plane without protruding structures, with a flatness less than 4 mm.

In some embodiments, the dimensional tolerance of the battery swapping system is within ±10 mm.

In some embodiments, in the battery swapping system, the vehicle weight M1 and the battery capacity Q satisfy: 0 kg < M1 ≤ 1400 kg, 100 kWh ≤ Q ≤ 200 kWh; or 1400 kg < M1 ≤ 2800 kg, 200 kWh < Q ≤ 400 kWh; or 2800 kg < M1 ≤ 4200 kg, 400 kWh < Q ≤ 600 kWh; or 4200 kg < M1 ≤ 5600 kg, 600 kWh < Q ≤ 800 kWh.

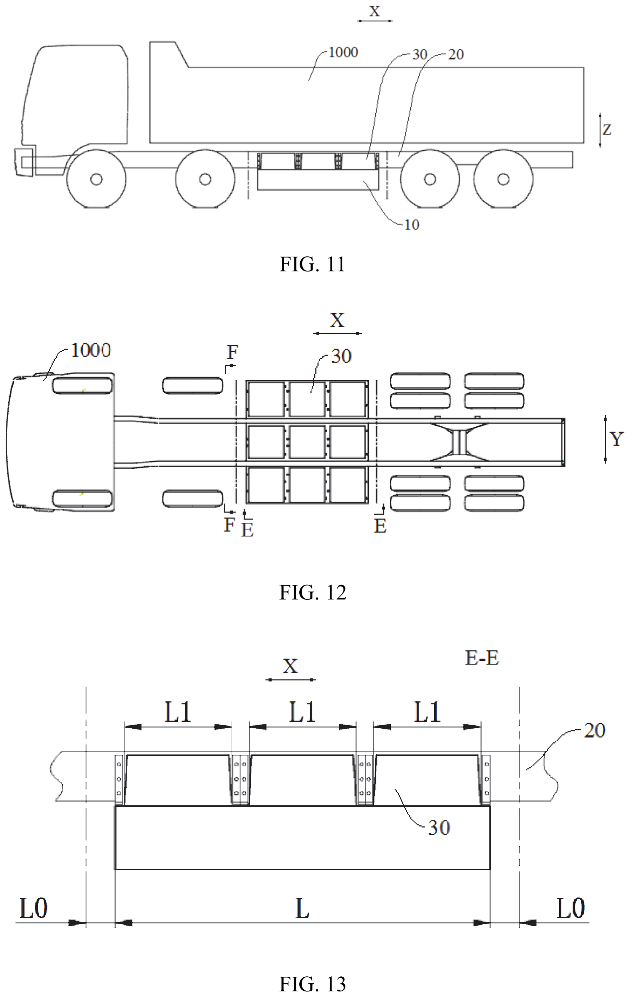

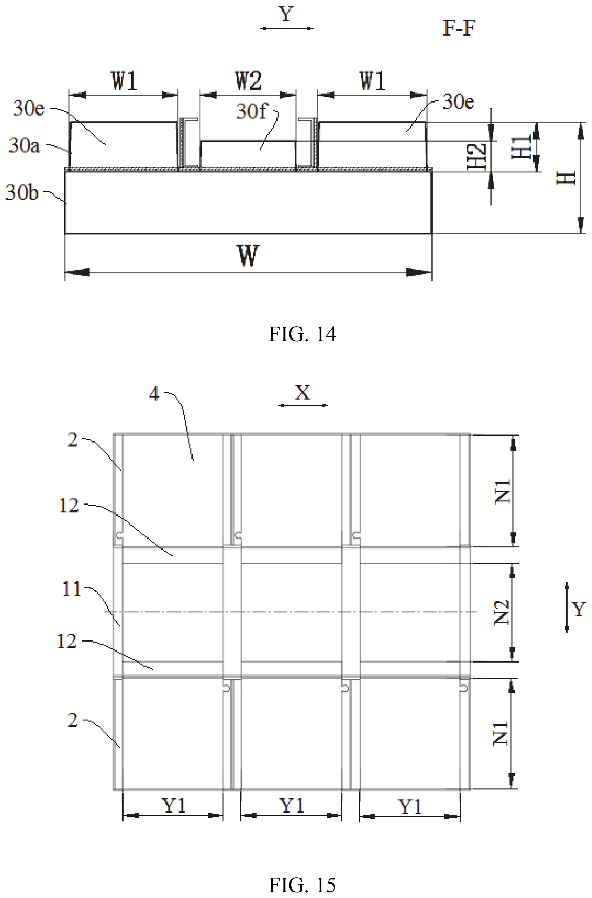

In some embodiments, as shown in FIGs. 11 and 12, the battery swapping system should be replaced on a vehicle within the corresponding envelope space, with the battery dimensions in the battery swapping system as indicated in FIGs. 13 and 14.

In some embodiments, referring to FIGs. 11 to 14, the front and rear end faces of the battery swapping system maintain a safety clearance L0 with the vehicle, where L0 ≥ 50 mm.

In some embodiments, referring to FIGs. 11 to 14, the dimension L of the battery swapping system along the length direction of the vehicle satisfies: 700 mm ≤ L ≤ 900 mm; or 1500 mm ≤ L ≤ 1700 mm; or 2300 mm ≤ L ≤ 2500 mm; or 3100 mm ≤ L ≤ 3300 mm.

In some embodiments, referring to FIGs. 11 to 14, the dimension W of the battery swapping system along the width direction of the vehicle satisfies: 2300 mm ≤ W ≤ 2550 mm.

In some embodiments, referring to FIGs. 11 to 14, the total height H of the battery swapping system satisfies: H ≤ 680 mm.

In some embodiments, referring to FIGs. 11 to 14, the length dimension L1 of the upper platform (for example, the upper battery portion 30a) of the battery swapping system satisfies: 600 mm ≤ L1 ≤ 700 mm.

In some embodiments, referring to FIGs. 11 to 14, the width dimension W1 of the upper side platforms (for example, a part of the upper battery portion 30a on the battery side portion 30e) of the battery swapping system satisfies: W1 ≤ 805 mm.

In some embodiments, referring to FIGs. 11 to 14, the width dimension W2 of the upper middle platform (for example, a part of the upper battery portion 30a on the battery central portion 30f) of the battery swapping system satisfies: W2 ≤ 640 mm.

In some embodiments, referring to FIGs. 11 to 14, the height dimension H1 of the upper side platforms (for example, a part of the upper battery portion 30a on the battery side portion 30e) of the battery swapping system satisfies: H1 ≤ 300 mm.

In some embodiments, referring to FIGs. 11 to 14, the height dimension H2 of the upper middle platform (for example, a part of the upper battery portion 30a on the battery central portion 30f) of the battery swapping system satisfies: H2 ≤ 150 mm.

The application scenarios for heavy-duty electric trucks currently include long-haul logistics, short- to medium-distance operations (for example, urban waste transport), and enclosed operation scenarios (for example, ports). The corresponding energy demands can be roughly divided into three categories: 400-600 kWh, 300-400 kWh, and 150-200 kWh. Based on this energy series, adopting a standard pack solution allows flexible configuration for different scenarios. For example, a standard battery swapping system with a capacity of approximately 150-200 kWh can use three standard battery swapping systems (referred to as triple-pack), two standard battery swapping systems (referred to as dual-pack), or a single standard battery swapping system (referred to as single-pack) to meet energy demands.

The main models of heavy-duty electric trucks currently include: 6x4 tractors, 4x2 tractors, 8x4 dump trucks, 6x4 dump trucks, 4x2 cargo trucks, and 6x4 cargo trucks, among which the 6x4 tractor and 8x4 dump truck have relatively short wheelbases, while other models are compatible. For the 6x4 tractor, the traditional fuel vehicle wheelbase is 3300 mm, which is an ideal wheelbase but currently cannot accommodate large energy capacities. For rear-swap models, the wheelbase has been extended to 3800 mm, but this space still cannot accommodate the target energy capacity. Efforts are being made to extend the wheelbase to 4200 mm, based on which the battery space is allocated. For the 8x4 dump truck, some are used in cities, while others are used in mining areas. Mining 8x4 dump trucks have a longer wheelbase to ensure transport capacity, and the wheelbase is further extended. This space can accommodate the target battery capacity. Urban 8x4 dump trucks with traditional fuel vehicle have a wheelbase of 2500 mm to 2600 mm, and the space cannot accommodate the target energy capacity, and for rear-swap models, the wheelbase has been extended to 3200 mm to 3300 mm, with underbody battery swap based on this extended wheelbase for battery space allocation.

The space constraints at the front end of the battery include the leaf spring and its bracket, with the industry typically at 1600 mm to 1800 mm (900 mm per side) under heavy load conditions. The space constraints at the rear end of the battery include the mudguard positioned approximately 700 mm from the wheel center, and a 50 mm safety clearance reserved at both the front and rear ends of the battery. Therefore, the envelope size for the battery swapping system for a 6x4 tractor is approximately 4200-900-700-100=2500 mm (triple-pack), and for an 8x4 dump truck, the envelope size for the battery swapping system is approximately 3300-900-700-100=1600 mm (dual-pack). Based on the envelope space of these two battery swapping systems, considering a gap of 20 mm to 30 mm between battery swapping systems, the length envelope size for each battery swapping system is approximately 700 mm to 820 mm.

The width envelope size of the battery swapping system is designed to not exceed the legally required vehicle width, for example, 2550 mm for heavy-duty electric trucks.

The height envelope size of the battery swapping system is designed with a 20 mm gap between the upper end of the battery swapping system and the upper flange of the vehicle beam, and the bottom surface of the battery swapping system maintains a ground clearance of 300 mm or 400 mm or more. The upper flange of the vehicle beam typically has a ground clearance of 1000 mm to 1100 mm, so the height envelope size for the battery swapping system is approximately 580 mm to 780 mm.

Furthermore, to improve compatibility and interchangeability in battery swap, this application also proposes some embodiments related to the battery installation frame 10.

In some embodiments, referring to FIG. 15, in the length direction of the vehicle (for example, the first direction X), the length of the battery mounting space 4 is Y1, and satisfies: 620 mm ≤ Y1 ≤ 720 mm.

In some embodiments, referring to FIG. 15, in the width direction of the vehicle (for example, the second direction Y), the width of the battery mounting space 4 is N1, and satisfies: 690 mm ≤ N1 ≤ 815 mm.

In some embodiments, referring to FIG. 15, in the width direction of the vehicle (for example, the second direction Y), the minimum width between the two second main walls 12 is N2, and satisfies: 660 mm ≤ N2 ≤ 680 mm.

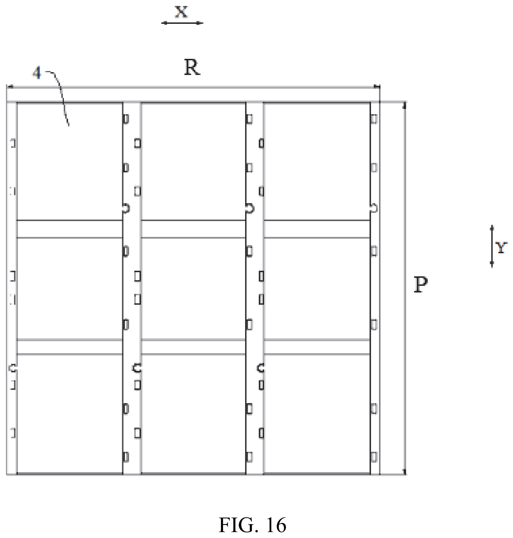

In some embodiments, referring to FIG. 16, in the width direction of the vehicle (for example, the second direction Y), the total width of the battery installation frame 10 is P, and in the length direction of the vehicle (for example, the first direction X), the total length of the battery installation frame 10 is R, and satisfies: 2300 mm ≤ P ≤ 2550 mm, 700 mm ≤ R ≤ 900 mm (for example, having only one battery mounting space 4), or 1500 mm ≤ R ≤ 1700 mm (for example, having two battery mounting spaces 4), or 2300 mm ≤ R ≤ 2500 mm (for example, having three battery mounting spaces 4), or 3100 mm ≤ R ≤ 3300 mm (for example, having four battery mounting spaces 4).

The above embodiments are only used to illustrate the technical solutions of this application and are not intended to limit them. Although this application has been described in detail with reference to the foregoing embodiments, those skilled in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. this application is not limited to the specific embodiments disclosed herein but includes all technical solutions falling within the scope of the claims.

## Claims

1. A battery installation frame, comprising a plurality of extension portions spaced apart, wherein a battery mounting space running through along a height direction of the extension portions is formed between two adjacent extension portions, and the battery installation frame is provided with a battery mounting structure configured for mounting a battery in the battery mounting space.

2. The battery installation frame according to claim 1, wherein the two extension portions defining the battery mounting space are spaced apart in a first direction and connected to each other through a main body portion, wherein the main body portion is located on one side of the extension portions in a second direction, and the first direction intersects with the second direction in a plane perpendicular to the height direction of the extension portions.

3. The battery installation frame according to claim 2, wherein the two extension portions defining the battery mounting space are further connected to each other through a reinforcing portion, wherein the reinforcing portion and the main body portion are disposed on both sides of the extension portions in the second direction.

4. The battery installation frame according to claim 3, wherein at least one of the main body portion, the extension portion, and the reinforcing portion is provided with the battery mounting structure.

5. The battery installation frame according to any one of claims 2 to 4, wherein the battery mounting structure is arranged on a side of the extension portion facing the battery mounting space.

6. The battery installation frame according to claim 5, wherein the battery installation frame is provided with a plurality of battery mounting structures, with at least two battery mounting structures spaced apart along the second direction.

7. The battery installation frame according to any one of claims 2 to 6, wherein the extension portion is plate-shaped, with a thickness direction of the extension portion being the first direction and a length direction of the extension portion being the second direction.

8. The battery installation frame according to claim 7, wherein a height of the extension portion in the second direction decreases in a direction away from the main body portion.

9. The battery installation frame according to claim 8, wherein the battery mounting structure is arranged at a lower edge of the extension portion in the height direction, wherein the lower edge of the extension portion extends along a horizontal line, and an upper edge of the extension portion descends in a direction away from the main body portion.

10. The battery installation frame according to any one of claims 7 to 9, wherein the extension portion is provided with a reinforcing rib and/or a weight-reducing structure.

11. The battery installation frame according to any one of claims 2 to 10, wherein the battery installation frame comprises a plurality of battery mounting spaces spaced apart along the first direction.

12. The battery installation frame according to claim 11, wherein at least one of the extension portions is a shared extension portion, and two of the battery mounting spaces spaced apart along the first direction are separated by the shared extension portion.

13. The battery installation frame according to claim 12, wherein battery mounting structures are arranged on both sides of the shared extension portion facing the battery mounting spaces on both sides.

14. The battery installation frame according to claim 13, wherein the battery mounting structures on both sides of the shared extension portion have misaligned orthogonal projections on a projection plane perpendicular to the first direction.

15. The battery installation frame according to any one of claims 2 to 14, wherein the extension portions on both sides of the battery mounting space in the first direction are provided with battery mounting structures.

16. The battery installation frame according to claim 15, wherein the battery mounting structures on both sides of the battery mounting space in the first direction have misaligned orthogonal projections on a projection plane perpendicular to the first direction.

17. The battery installation frame according to any one of claims 2 to 16, wherein a plurality of extension portions defining a plurality of battery mounting spaces spaced apart along the first direction are connected to the same main body portion.

18. The battery installation frame according to any one of claims 2 to 17, wherein on both sides of the main body portion in the second direction, the main body portion is connected with a plurality of extension portions spaced apart along the first direction.

19. The battery installation frame according to claim 18, wherein the extension portions on both sides of the main body portion are arranged in a one-to-one correspondence along the second direction, wherein two extension portions arranged in a one-to-one correspondence have identical lengthwise extension directions and have coinciding orthogonal projections along the lengthwise extension directions of the extension portions.

20. The battery installation frame according to any one of claims 2 to 19, wherein the main body portion comprises a beam clearance slot, the beam clearance slot having an opening running through in the first direction.

21. The battery installation frame according to claim 20, wherein the main body portion comprises a first main wall and two second main walls, wherein the two second main walls are arranged along the first direction and respectively connected to two ends of the first main wall in the second direction, forming the beam clearance slot with an open top between the two second main walls and the first main wall.

22. The battery installation frame according to claim 21, wherein the extension portion is connected to the second main wall and is located on a side of the second main wall away from the first main wall in the second direction.

23. The battery installation frame according to any one of claims 20 to 22, wherein at least one of the main body portion and the extension portion is provided with a beam connection structure.

24. A frame assembly, comprising a vehicle frame and the battery installation frame according to any one of claims 1 to 23, wherein the battery installation frame is configured for installing a battery to the vehicle frame, and the height direction of the extension portion is a height direction of the vehicle frame.

25. The frame assembly according to claim 24, wherein:
the battery installation frame is arranged at a bottom of the vehicle frame; and
the vehicle frame comprises a vehicle beam, wherein at least one side of the vehicle beam in a width direction of the vehicle beam is provided with the extension portion, and at least a portion of the extension portion is higher than a bottom surface of the vehicle beam.

26. The frame assembly according to claim 25, wherein on both sides of the vehicle beam in the width direction, a plurality of extension portions are provided, and on both sides of the vehicle beam in the width direction, a plurality of battery mounting spaces are arranged along a length direction of the vehicle beam.

27. A vehicle, comprising a battery and the frame assembly according to any one of claims 24 to 26, wherein at least a portion of the battery is accommodated in the battery mounting space.

28. The vehicle according to claim 27, wherein:
the battery comprises an upper battery portion and a lower battery portion, the upper battery portion being accommodated in the battery mounting space; and
the battery is provided with an installation structure at a position between the upper battery portion and the lower battery portion, the installation structure being detachably connected to the battery mounting structure.

29. The vehicle according to claim 28, wherein in a spacing direction of the extension portions, a dimension of the upper battery portion is smaller than a dimension of the lower battery portion, forming a stepped surface between the upper battery portion and the lower battery portion, the stepped surface abutting against a bottom of the extension portion.

30. The vehicle according to any one of claims 27 to 29, wherein the battery comprises two battery side portions and a battery central portion, wherein:
in a width direction of the vehicle frame, the two battery side portions are located on both sides of the battery central portion, a top surface of the battery central portion being lower than a top surface of the battery side portions to form a clearance slot running through along a length direction of the vehicle frame with an open top for avoiding the vehicle beam; and
at least one of the battery central portion and the battery side portions is detachably connected to the battery mounting structure.
